# EUROPÄISCHE PATENTANMELDUNG

(11) **EP 0 763 910 A2**
(43) Veröffentlichungstag der Anmeldung: **19.03.1997**
(21) Anmeldenummer: 96113647.0
(22) Anmeldetag: 26.08.1996
(51) Int. Cl.: H04H 1/02, H04Q 11/04

(54) **Flexibler Netzabschluss für hochbitratige Kupfer-Glasfaser-Systeme**

(30) Priorität: 13.09.1995 DE 19533970
(71) Anmelder: SIEMENS AKTIENGESELLSCHAFT, 80333 München (DE)
(72) Erfinder: Schmücking, Dirk, Dipl.-Ing., 81545 München (DE); Wörner, Achim, Dipl.-Ing., 82031 Grünwald (DE); Schenk, Martin, Dipl.-Ing., 80798 München (DE)

(57) **Zusammenfassung**

Bisher wurden das Koaxialkabel der Breitbandverteildienste und das Verzweigungskabel des Fernsprechnetzes in die Keller größerer Gebäude zu Übergabe bzw. Abschlußpunkten geführt, von denen Kupferdoppeladern bzw. Koaxialkabel zu den bei den einzelnen Teilnehmern befindlichen Netzabschlußgeräten führten. Erfindungsgemäß wird ein zentraler Netzabschluß im Keller des Gebäudes vorgesehen, der mit beiden öffentlichen Netzen verbunden ist und an den die einzelnen Teilnehmer über für die jeweilige Signalbitrate durchlässige Kabel angeschlossen sind.

## Beschreibung

Die Erfindung betrifft eine Einrichtung zum Netzabschluß entsprechend dem Oberbegriff des Patentanspruchs 1.

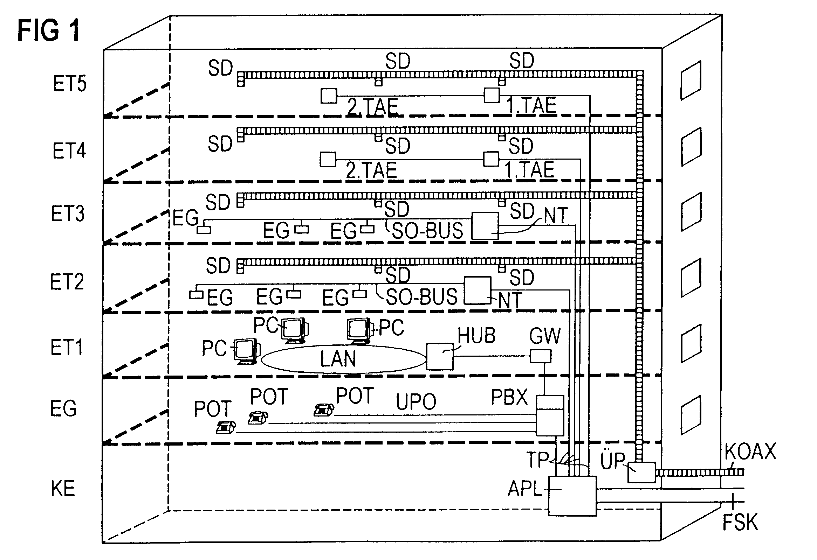

Die Bereitstellung unterschiedlichster Telekommunikationsdienste, also beispielsweise von Breitband-Verteildiensten für Rundfunk und Fernsehen sowie von interaktiven Diensten hat im Teilnehmeranschlußbereich und innerhalb großer Gebäude zur Koexistenz mehrerer separater Kommunikationsnetze geführt. Die einzelnen Netze weisen dabei nicht nur unterschiedliche Schnittstellen zwischen öffentlichem und privatem Netz auf, diese Schnittstellen können sich auch an verschiedenen Stellen im Haus befinden. So endet beispielsweise bei dem in Figur 1 als Beispiel für den Stand der Technik dargestellten Gebäude das Verzweigungskabel FSK des Fernsprechnetzes im Keller an einem Abschlußpunkt APL. Von dort erfolgt die Übertragung über verdrillte Kupferdoppeladern enthaltende Kabel TP, die international auch als Twisted-Pair-Cable bezeichnet werden. Bei einem in der 2. und der 3. Etage ET2, ET3 befindlichen ISDN-Anschluß ist das an die verdrillten Doppeladern TP der Hausinstallation angeschlossene Netzabschlußgerät NT jeweils in der Wohnung des Teilnehmers, der auch für die Verkabelung über den sogenannten SO-Bus vom Netzabschlußgerät NT zu den Teilnehmerendgeräten EG zu sorgen hat. Entsprechend dem Bedarf können auch wie im Erdgeschoß und in der 1. Etage des Gebäudes nach Figur 1 verdrillte Kupferdoppeladerkabel TP zur Verbindung des Abschlußpunktes APL des Verzweigungskabels zu einer privaten Nebenstellenvermittlung PBX und von dieser zu einzelnen Fernsprechendgeräten POT und über ein sogenanntes Gateway GW als Schnittstelle zwischen öffentlichem und privatem Netz zu einem Hauptrechner HUB geführt sein, an den in Form eines örtlichen Netzes LAN mehrere Personalcomputer PC angeschlossen sind. Die Endpunkte des im Haus installierten Breitband-Koaxialkabels sind Steckdosen, an die Teilnehmerendgeräte angeschlossen werden können. Über verdrillte Kupferdoppeladerkabel TP sind außerdem die erste und die zweite Teilnehmeranschlußeinheit TAE1, TAE2 mit dem Abschlußpunkt des Fernsprechverzweigungskabels FSK verbunden, so daß sich insgesamt eine komplexe Hausinstallation mit einer Vielzahl an Anschlußmöglichkeiten für die unterschiedlichsten Kommunikationsbedürfnisse ergibt.

Mit der Übertragung höherer Bitraten über das Fernsprechnetz ergibt sich das Problem, daß die bisher für diese Dienste vorgesehenen installierten Kabel häufig nicht weiterverwendet werden können und daß sich durch die bei jedem Teilnehmer an interaktiven Diensten befindlichen Sende- und Empfangseinrichtungen ein vergleichsweise hoher Aufwand ergibt.

Die Aufgabe der Erfindung besteht also darin, die eingangs erwähnte Einrichtung zum Netzabschluß mit möglichst wenig Aufwand so weiterzuentwickeln, daß die Übertragung höherer Datenraten von und zu einzelnen Teilnehmern möglich ist. Erfindungsgemäß wird die Aufgabe durch eine Einrichtung der eingangs erwähnten Art gelöst, die entsprechend dem Kennzeichen des Patentanspruchs 1 ausgebildet ist. Die besonderen Vorteile der erfindungsgemäßen Lösung liegen in der Flexibilität beim Einsatz neuer Installationskabel, so daß der Ersatz der gesamten Hausverkabelung in vielen Fällen nicht notwendig sein dürfte. Zweckmäßige Weiterbildungen der erfindungsgemäßen Weiterbildungen sind in den Patentansprüchen 2 bis 5 näher beschrieben.

Die Erfindung soll im folgenden anhand eines in der Zeichnung dargestellten Ausführungsbeispiels näher erläutert werden. Dabei zeigt:
- Figur 1: ein mehrstöckiges Gebäude mit der bisherigen Anschlußweise der einzelnen Teilnehmer und
- Figur 2: das Gebäude mit den erfindungsgemäßen Einrichtungen und der dazu notwendigen Verkabelung.

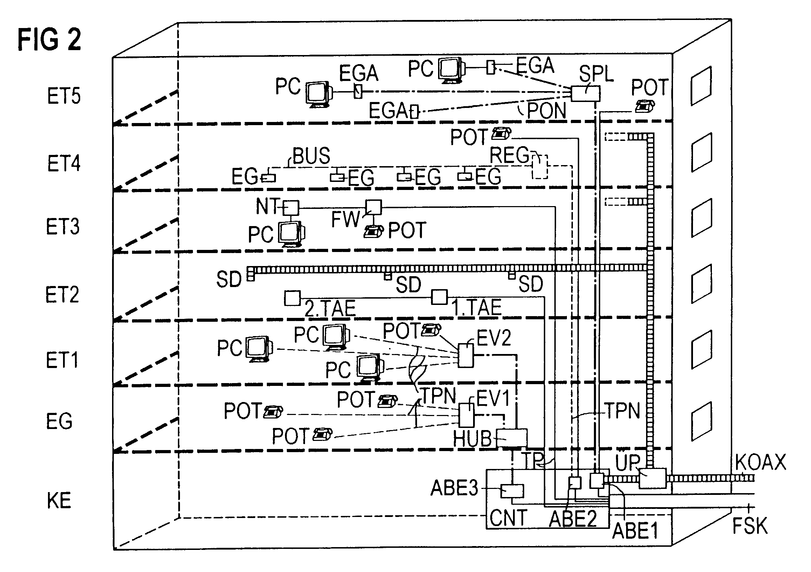

Die Figur 1 ist in Verbindung mit der Darstellung des Standes der Technik bereits ausreichend erläutert worden. Zur Übertragung interaktiver Breitbanddienste müssen die bestehenden Netze, also sowohl das Fernsprechnetz als auch die Breitbandverteilnetze mit Glasfasersystemen im Teilnehmeranschlußbereich aufgerüstet werden. Dabei ermöglicht ein hybrides Glasfaser-Kupferdoppeladersystem, bei dem zwischen Vermittlungsstelle und Kabelverzweiger bzw. Abschlußpunkt APL über Glasfaser und von da zum Teilnehmer über die vorhanden Verzweigungskabel übertragen wird, Datenraten im Bereich von mehreren 10 Megabit/s. In der Figur 2 ist dargestellt, daß das mit dem Breitbandverteilnetz verbundene Koaxialkabel KOAX in den Keller des Gebäudes zu einem Übergabepunkt ÜP geführt ist, parallel dazu ist das Verzweigungskabel FSK des öffentlichen Fernsprechnetzes im Keller mit einem zentralen Netzabschluß CNT verbunden, an den auch der Übergabepunkt ÜP des Koaxialkabels angeschlossen ist.

Anstatt die teilnehmerseitigen kombinierten Sende-Empfangseinrichtungen VHDSLT wie bei ISDN in den einzelnen Wohnungen bzw. zusammengehörigen Etagen zu plazieren, wird entsprechend der in Figur 2 dargestellten zukünftigen Anschlußweise der Teilnehmer ein zentraler Netzabschluß CNT als definierte Schnittstelle am Abschlußpunkt des Verzweigungskabels FSK des Fernsprechnetzes gebildet. Zusätzlich ist der zentrale Netzabschluß CNT mit dem Koaxialkabel KOAX des Breitbandverteilnetzes verbunden und enthält für beide Netze entsprechende Abschlußeinrichtungen. Schmalbandige Dienste wie übliches Fernsprechen und ISDN-Basisanschluß werden am zentralen Netzabschluß CNT vom breitbandigen Datenstrom getrennt und über die vorhandene Infrastruktur übertragen. Für die breitbandigen Signale werden neue Übertragungskabel installiert oder auch die schon vorhandenen installierten Koaxialkabel weiterverwendet. So wird das vorhandene Koaxialkabel zur Verteilung von Breitbanddiensten weiterhin verwendet, um in der zweiten, dritten und vierten Etage ET2, ET3, ET4 Breitbandsignale bereitzustellen. Durch den Anschluß des zentralen Netzabschlusses CNT an den um mindestens einen Bandpaß erweiterten Übergabepunkt ÜP des Breitbandverteilnetzes ist es nun aber auch möglich, die Koaxialkabel des Breitbandverteilnetzes zur Übertragung zusätzlicher breitbandiger Signale zu verwenden. Aus diesem Grund sind erste kombinierte Empfangseinrichtungen ABE1 im zentralen Netzabschluß CNT vorgesehen, die mit dem Verzweigungskabel FSK des Fernsprechnetzes und mit dem Koaxialkabel KOAX verbunden sind. Zusätzlich zu dem vorhandenen Kupferdoppeladerkabel TP zur Versorgung der Fernsprechdienste in der fünften Etage ET5 ist ein Glasfaserkabel zu einem Strahlteiler SPL in der fünften Etage ET5 verlegt, über das Lichtsignale übertragen und vom Strahlteiler SPL über ein passives optisches Netzwerk PON zu Endgeräteanschlüssen EGA weitergeleitet werden, in denen eine optoelektrische bzw. elektrooptische Wandlung der Übertragungssignale stattfindet und an die über Kupferdoppeladern TP Teilnehmerendgeräte, im vorliegenden Falle Personalcomputer PC, angeschlossen sind. Der zentrale Netzabschluß CNT kann zweite Abschlußeinrichtung ABE2 enthalten, die nur mit dem Verzweigungskabel FSK des Fernsprechnetzes verbunden sind und an die beispielsweise die Telefondienste der vierten Etage ET4 sowie breitbandige Endgeräte über einen Bus und über ein neuverlegtes besonders breitbandiges Kupferdoppeladerkabel TPN angeschlossen sind. Im zentralen Netzabschluß CNT sind weiterhin direkte Durchschleifungen vom Verzweigungskabel FSK des Fernsprechnetzes zu Teilnehmeranschlußeinheiten TAE in der zweiten Etage ET2 und im Rahmen eines asymmetrischen digitalen Teilnehmerleitungssystems (ADSL)zu einer Freguenzweiche FW zur Ausfilterung analoger Fernsprechsignale in der dritten Etage vorgesehen, wobei an die Frequenzweiche FW ein übliches Fernsprechgerät POT für die analogen niederfrequenten Signale angeschlossen ist und die hochfrequenteren digitalen Signale über ein bereits vorhandenes Netzabschlußgerät NT an einen Personalcomputer PC weitergeleitet werden. Mit einer dritten Sende-Empfangseinrichtung ABE3 im zentralen Netzabschluß CNT ist über ein Glasfaserkabel der Hauptrechner Hub eines firmeneigenen Kommunikationssystems verbunden, das sich über das Erdgeschoß EG und die erste Etage ET1 des in Figur 2 dargestellten Hauses erstreckt. Dabei ist an den Hauptrechner Hub über Glasfaser ein erster Etagenverteiler EV1 angeschlossen, der die optoelektrische und die elektrooptische Umwandlung der Signale für das Erdgeschoß vornimmt und die Signalübertragung über bereits vorhandene Kupferdoppeladern TP zu Fernsprechendgeräten POT sicherstellt. An den Hauptrechner Hub ist außerdem ein zweiter Etagenverteiler EV2 angeschlossen, der ebenfalls zur optoelektrischen und elektrooptischen Umwandlung der Signale und zur Übertragung dieser Signale über neuverlegte Kupferdoppeladerkabel TPN zu einem üblichen Fernsprechgerät POT und zu Personalcomputern PC dient und in der ersten Etage ET1 angeordnet ist.

Es ist erkennbar, daß bei Verwendung des zentralen Netzabschlusses CNT die Verkabelung von Teilnehmern, die nur bestehenden Dienste, wie beispielsweise ISDN in Anspruch nehmen, unverändert bleiben kann. Bei Teilnehmern an interaktiven breitbandigen Diensten gibt es für den Anschluß der Endgeräte an den zentralen Netzabschluß CNT die Möglichkeit, eine Busverbindung aufzubauen, bei der unter Verwendung von besonders breitbandigen Kupferdoppeladerkabeln TPN und eventuell unter zusätzlicher Verwendung eines Regenerators REG wie in der vierten Etage ET4 die Verbindung zum zentralen Netzabschluß CNT erfolgt und über das vorhandene schmalbandige Kupferdoppeladerkabel TP der vorhandene Fernsprecher POT angeschlossen wird. Für eine größere Anzahl von breitbandigen Endgeräten ist es sinnvoll, wie beispielsweise in der fünften Etage ET5 ein passives optisches Netz PON aufzubauen, das über einen optischen Strahlteiler SPL und ein Glasfaserkabel mit der entsprechenden Abschlußeinrichtung ABE des zentralen Netzabschlusses verbunden ist. Als Übertragungstechnik können dabei TDM-/TDMA-Zugriffsverfahren oder auch Wellenlängenmultiplex zur Anwendung kommen. Durch die Möglichkeit, die Glasfasern im Steigbereich und Kupferkabel für die horizontale Verkabelung einzusetzen, ergibt sich eine weitere ökonomische Lösung für spezielle Ansprüche an die breitbandige Übertragungsmöglichkeit für interaktive Dienste.

Zusammenfassend ist festzustellen, daß durch die Einführung eines zentralen Netzabschlusses CNT und damit einer definierten Schnittstelle zwischen öffentlichem Netz und Hausinstallation eine maximale Flexibilität hinsichtlich der Deckung des Bedarfs an Übertragungsmöglichkeiten für unterschiedlich breitbandige Signale erreicht wird und dabei keine Abhängigkeit vom Übertragungsmedium im Hause besteht. Während bei bisherigen Lösungen grundsätzlich neue Installationskabel erforderlich waren, ergibt sich nunmehr die Möglichkeit vorhandene Kabel mit auszunutzen und somit die zum Einführungszeitpunkt optimale Verkabelung zu erreichen. Damit kann die maximale Übertragungskapazität erzielt werden, die über das vorgegebene Fernsprech-Verzweigungskabel FSK möglich ist. Die am Kabelverzweiger und beim Teilnehmer räumlich konzentrierten Netzabschlußeinrichtungen ermöglichen eine erhebliche Steigerung der Übertragungskapazität durch den Einsatz von Nahnebensprech-Kompensatoren. Zusätzlich kann durch Mehrfachausnutzung von vorhandenen kombinierten Sende-Empfangseinrichtungen VHDSLT eine besonders ökonomische Lösung erreicht werden. Weiterhin kann ein zweiter Netzabschluß in Dachnähe eingerichtet werden, über den die von Empfangsantennen stammenden Signale in das Hausnetz eingespeist werden können.

## Patentansprüche

1. Einrichtung zum Netzabschluß von Fernsprech- und Breitbandverteilnetzen für eines oder mehrere miteinander verbundene Gebäude mit Anschlußmöglichkeiten für schmalbandige interaktive Dienste und Fernsprechen und breitbandige Verteildienste mit einem vorzugsweise im Keller des oder der Gebäude befindlichen Übergabepunktes für das Breitbandverteilnetz und eines benachbarten Abschlußpunktes des Verzweigungskabels des Fernsprechnetzes,
**dadurch gekennzeichnet,**
daß wenigstens ein zentraler Netzabschluß (CNT) vorgesehen ist, der mit dem die interaktiven Dienste und die Fernsprechsignale führenden Verzweigungskabel (FSK) des Fernsprechnetzes und mit dem Koaxialkabel(KOAX) des breitbandigen Verteilnetz (BKN) und mit der Hausinstallation verbunden ist und der im Anschluß an das Verzweigungskabel (FSK) und hochratige digitale Teilnehmernetze kombinierte Sende-Empfangseinrichtungen(ABE 1,2,3)) enthält.

2. Einrichtung nach Patentanspruch 1,
**dadurch gekennzeichnet,**
daß die in Verbindung mit dem hochratigen Teilnehmernetz befindlichen Sende- und Empfangseinrichtungen Nahnebensprech-Kompensatoren enthalten.

3. Einrichtung nach Patentanspruch 1,
**dadurch gekennzeichnet,**
daß der analoge Telefonanschluß und der ISDN-Anschluß im zentralen Netzabschluß (CNT) ausgekoppelt und über das vorhandene Installationskabel zu bei den Teilnehmern befindlichen Endgeräten mittels einer Busanordnung übertragen werden.

4. Einrichtung nach Patentanspruch 1,
**dadurch gekennzeichnet,**
daß eine größere Anzahl von breitbandigen Endgeräten über ein passives optisches Netz mittels TDM-/TDMA-Zugriffsverfahren mit dem zentralen Netzabschluß (CNT) verbunden sind und daß die über das Breitbandverteilnetz herangeführten Verteildienste wahlweise über Wellenlängenmultiplex oder eine zusätzliche optische Verbindung zu den Teilnehmerendgeräten übertragen werden.

5. Einrichtung nach Patentanspruch 1,
**dadurch gekennzeichnet,**
daß zur Verbindung zwischen den Etagen und dem zentralen Netzabschluß (CNT) im Steigbereich Glasfasern und für die horizontale Verkabelung Kupferkabel eingesetzt werden.
